(19) **Europäisches Patentamt / European Patent Office / Office européen des brevets**

(11) **EP 4 138 441 A1**

(12) # EUROPEAN PATENT APPLICATION
published in accordance with Art. 153(4) EPC

(43) Date of publication:
**22.02.2023 Bulletin 2023/08**

(21) Application number: **21789217.3**

(22) Date of filing: **14.04.2021**

(51) International Patent Classification (IPC):
**H04W 24/10** *(2009.01)*     **H04W 72/04** *(2009.01)*

(52) Cooperative Patent Classification (CPC):
**H04W 24/10; H04W 72/04**

(86) International application number:
**PCT/CN2021/087209**

(87) International publication number:
**WO 2021/208958 (21.10.2021 Gazette 2021/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.04.2020   CN 202010296361**

(71) Applicant: **Vivo Mobile Communication Co., Ltd.
Dongguan, Guangdong 523863 (CN)**

(72) Inventors:
- **YANG, Ang**
  **Dongguan, Guangdong 523863 (CN)**
- **SUN, Peng**
  **Dongguan, Guangdong 523863 (CN)**

(74) Representative: **Conti, Marco
Bugnion S.p.A.
Via di Corticella, 87
40128 Bologna (IT)**

(54)    **METHOD FOR TRANSMITTING BEAM REPORT, MOBILE TERMINAL AND NETWORK DEVICE**

(57)    Embodiments of the present invention disclose a beam report transmission method, a mobile terminal, and a network device, to guarantee transmission and reception performance and reduce overheads of beam reports. The method includes: sending corresponding first beam reports respectively to a plurality of first transmission and reception points, where the first beam reports are reports of reference signals corresponding to the first transmission and reception points.

100

S104

A mobile terminal sends corresponding first beam reports respectively to a plurality of first transmission and reception points

FIG. 1

## Description

## CROSS-REFERENCE TO RELATED APPLICATIONS

The present invention claims priority to Chinese Patent Application No. 202010296361.0, filed in China on April 15, 2020, and entitled "BEAM REPORT TRANSMISSION METHOD, MOBILE TERMINAL, AND NETWORK DEVICE", which is incorporated herein by reference in its entirety.

## TECHNICAL FIELD

Embodiments of the present invention relate to the communications field, and in particular, to a beam report transmission method, a mobile terminal, and a network device.

## BACKGROUND

During a beam measurement, a reference signal resource set (RS resource set) is configured for a transmission and reception point (Transmission and Reception Point, TRP). The RS resource set includes at least one reference signal resource, for example, a synchronization signal and PBCH block (Synchronization Signal and PBCH block, SSB) resource or a channel state information reference signal (Channel State Information Reference Signal, CSI-RS) resource. UE measures L1 reference signal received power (Layer 1 reference signal received power, L1-RSRP) or an L1 signal to interference plus noise ratio (L1 signal-to-noise and interference ratio, L1-SINR) of each RS resource and reports at least one optimal measurement result to the TRP. Content of the report reflects at least one optimal beam and quality of the beam, so that the TRP determines a beam for transmitting a channel or signal to the UE.

Currently, there is a multi-TRP scenario, and the multi-TRP scenario can improve transmission reliability and throughput performance. For example, the UE can receive same or different data from a plurality of TRPs. However, the prior art does not disclose or suggest how to report beam reports for the multi-TRP scenario to guarantee transmission and reception performance and reduce overheads of the beam reports.

## SUMMARY

Objectives of embodiments of the present invention are to provide a beam report transmission method, a mobile terminal, and a network device, to guarantee transmission and reception performance and reduce overheads of beam reports.

According to a first aspect, a beam report transmission method is provided, where the method is performed by a mobile terminal, and the method includes: sending corresponding first beam reports respectively to a plurality of first transmission and reception points, where the first beam reports are reports of reference signals corresponding to the first transmission and reception points.

According to a second aspect, a beam report transmission method is provided, where the method is performed by a first transmission and reception point, and the method includes: receiving a first beam report sent by a mobile terminal, where the first beam report is a report of a reference signal corresponding to a first transmission and reception point.

According to a third aspect, a mobile terminal is provided and includes a processing module, configured to send corresponding first beam reports respectively to a plurality of first transmission and reception points, where the first beam reports are reports of reference signals corresponding to the first transmission and reception points.

According to a fourth aspect, a network device is provided and includes an operation module, configured to receive a first beam report sent by a mobile terminal, where the first beam report is a report of a reference signal corresponding to a first transmission and reception point.

According to a fifth aspect, a mobile terminal is provided, where the mobile terminal includes a processor, a memory, and a computer program stored in the memory and capable of running on the processor, and when the computer program is executed by the processor, the steps of the beam report transmission method according to the first aspect are implemented.

According to a sixth aspect, a network device is provided, where the network device includes a processor, a memory, and a computer program stored in the memory and capable of running on the processor, and when the computer program is executed by the processor, the steps of the beam report transmission method according to the second aspect are implemented.

According to a seventh aspect, a computer-readable storage medium is provided, where the computer-readable storage medium stores a computer program, and when the computer program is executed by a processor, the steps of the beam report transmission method according to the first aspect and/or the second aspect are implemented.

In the embodiments of the present invention, the corresponding first beam reports are respectively sent to the plurality of first transmission and reception points, where the first beam reports are the reports of the reference signals corresponding to the first transmission and reception points. Therefore, transmission and reception performance can be guaranteed and overheads of beam reports can be reduced.

## BRIEF DESCRIPTION OF DRAWINGS

The accompanying drawings described herein are intended for better understanding of this application, and constitute a part of this application. Exemplary embodiments and descriptions thereof in this application are intended to interpret this application and do not constitute any improper limitation on this application. In the accompanying drawings:

FIG. 1 is a schematic flowchart of a beam report transmission method according to an embodiment of the present invention;

FIG. 2 is a schematic flowchart of a beam report transmission method according to another embodiment of the present invention;

FIG. 3 is a schematic flowchart of a beam report transmission method according to another embodiment of the present invention;

FIG. 4 is a schematic flowchart of a beam report transmission method according to another embodiment of the present invention;

FIG. 5 is a schematic flowchart of a beam report transmission method according to another embodiment of the present invention;

FIG. 6 is a schematic structural diagram of a mobile terminal according to an embodiment of the present invention;

FIG. 7 is a schematic structural diagram of a network device according to an embodiment of the present invention;

FIG. 8 is a schematic structural diagram of a mobile terminal according to another embodiment of the present invention; and

FIG. 9 is a schematic structural diagram of a network device according to another embodiment of the present invention.

## DESCRIPTION OF EMBODIMENTS

To make the objectives, technical solutions, and advantages of this application clearer, the following clearly and completely describes the technical solutions of this application with reference to specific embodiments and accompanying drawings of this application. Apparently, the described embodiments are merely some but not all of the embodiments of this application. All other examples obtained by a person of ordinary skill in the art based on the examples of this application without creative efforts shall fall within the protection scope of this application. The term "and/or" in the embodiments of this specification represents presence of at least one of two connected objects.

It should be understood that the technical solutions of the embodiments of the present invention may be applied to various communications systems, such as a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS) or worldwide interoperability for microwave access (Worldwide Interoperability for Microwave Access, WiMAX) communications system, a 5G system or new radio (New Radio, NR) system, or a later evolved communications system.

In the embodiments of the present invention, a mobile terminal may include but is not limited to a mobile station (Mobile Station, MS), a mobile phone (Mobile Telephone), user equipment (User Equipment, UE), a handset (handset), portable equipment (portable equipment), a vehicle (vehicle), or the like. The mobile terminal may communicate with one or more core networks by using a radio access network (Radio Access Network, RAN). For example, the mobile terminal may be a mobile phone (also referred to as a "cellular" phone) or a computer having a wireless communication function; or the mobile terminal may be a portable, pocket-sized, handheld, computer built-in, or in-vehicle mobile apparatus.

In the embodiments of the present invention, a network device is an apparatus deployed in the radio access network and configured to provide a wireless communication function for the mobile terminal. The network device may be a base station. The base station may include a macro base station, a micro base station, a relay station, an access point, and the like in various forms. Devices having base station functions may have different names in systems using different radio access technologies, for example, an evolved NodeB (Evolved NodeB, eNB or eNodeB) in an LTE network, a NodeB (NodeB) in a 3rd Generation (3rd Generation, 3G) network, or a network device in a later evolved communications system. However, the terms do not constitute any limitation.

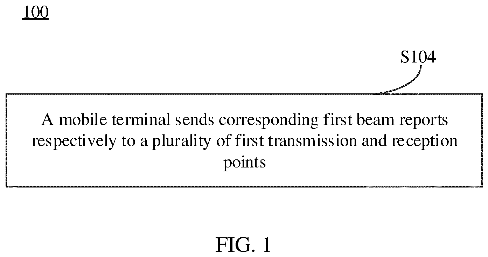

As shown in FIG. 1, an embodiment of the present invention provides a beam report transmission method 100. The method may be performed by a mobile terminal. In other words, the method may be performed by software or hardware installed in the mobile terminal. The method includes the following step.

S 104. A mobile terminal sends corresponding first beam reports respectively to a plurality of first transmission and reception points.

In a multi-TRP (MTRP) scenario, enhancement is performed when group-based beam reporting (groupBasedBeamReporting) in a CSI report configuration (CSI-ReportConfig) is set to "enable (enable)". There are a plurality of configuration modes in the MTRP scenario. For example, a control resource set pool index (CORESETPoolIndex) of a control resource set (COntrol REsource SET, CORESET) has a plurality of values or at least one non-zero value. For another example, a code point in a transmission configuration indicator indicated by downlink control information (DCI) includes a plurality of transmission configuration indicator states. For another example, identification information of other cells or TRPs is configured for a network. Details are not exhaustively illustrated herein. Identification information of a TRP may be a CORESETPoolIndex, a physical cell identifier, or another identifier that represents the TRP. When a plurality of CORESETPoolIndexs are configured for the network, control resource sets with a same CORESETPoolIndex belong to a same TRP.

The mobile terminal may send the corresponding first beam reports respectively to the plurality of first transmission and reception points, where the first beam reports are the reports of the reference signals corresponding to the first transmission and reception points. For example, for each TRP, the UE reports one reference signal (Reference Signal, RS), such as an optimal beam. The beam may also be referred to as a spatial domain filter (spatial domain filter), a spatial domain receive filter (spatial domain receive filter), or a spatial domain transmit filter (spatial domain transmit filter). A correspondence between a first transmission and reception point and an RS may be configured by the network or reported by the UE. The network configuration may be implemented by using a plurality of methods. For example, the network configures TRP identification information for the RS. For another example, the network configures an RS list or a transmission configuration indicator (Transmission Configuration Indicator, TCI) list for the TRP, and an RS in the RS list or the TCI list is an RS corresponding to the TRP. For another example, a CORESET corresponding to the TRP is associated with the RS by activating the RS, configuring the RS, or the like. For example, signaling for activating the RS or signaling for configuring the RS or signaling for associating the RS with a CSI report is sent by using a physical downlink shared channel (Physical Downlink Shared Channel, PDSCH) corresponding to the CORESET. For another example, a CSI report including RS quality is sent by using an uplink channel triggered by the CORESET, and the associated RS is an RS corresponding to the TRP. Details are not exhaustively illustrated herein.

After a first transmission and reception point receives a corresponding first beam report, a beam used by the first transmission and reception point to transmit a channel or signal to the UE may be determined based on the first beam report. In an implementation, when a report parameter in the first beam report and/or the group-based beam report is a CSI-RS resource indicator-signal-to-noise ratio (CSI-RS Resource Indicator-SINR, CRI-SINR) or an ssb-Index-SINR or an SRS resource indicator (SRS resource indicator, sri)-SINR, the report parameter is measured based on a reference signal in the first beam report. After a beam measurement and beam reporting, the network may provide a beam indication for a downlink/uplink channel or reference signal based on the report parameter, where the beam indication is used to establish a beam link between the network and the UE to transmit the channel or the reference signal.

For example, in a scenario in which a TRP 1, a TRP 2, ..., a TRP n exist, the UE sends, to the TRP 1, a first beam report corresponding to the TRP 1, where the first beam report corresponding to the TRP 1 is a report of a reference signal corresponding to the TRP 1. The UE sends, to the TRP 2, a first beam report corresponding to the TRP 2, where the first beam report corresponding to the TRP 2 is a report of a reference signal corresponding to the TRP 2, ..., and the UE sends, to the TRP n, a first beam report corresponding to the TRP n, where the first beam report corresponding to the TRP n is a report of a reference signal corresponding to the TRP n. In other words, only a beam related to a TRP needs to be reported to the TRP.

In comparison with a solution in which a mobile terminal sends a group-based beam report to all of a plurality of first transmission and reception points, where the group-based beam report includes reports of reference signals corresponding to the plurality of first transmission and reception points, that is, the mobile terminal sends a group-based beam report to all of the TRP 1, TRP 2, ..., TRP n, where the group-based beam report includes reports of all reference signals corresponding to the TRP 1, the TRP 2, ..., TRP n, in this step, overheads of the beam reports can be reduced on a basis of guaranteeing transmission and reception performance.

According to the beam report transmission method provided in this embodiment of the present invention, the corresponding first beam reports are respectively sent to the plurality of first transmission and reception points, where the first beam reports are the reports of the reference signals corresponding to the first transmission and reception points. Therefore, overheads of the beam reports can be reduced on the basis of guaranteeing transmission and reception performance.

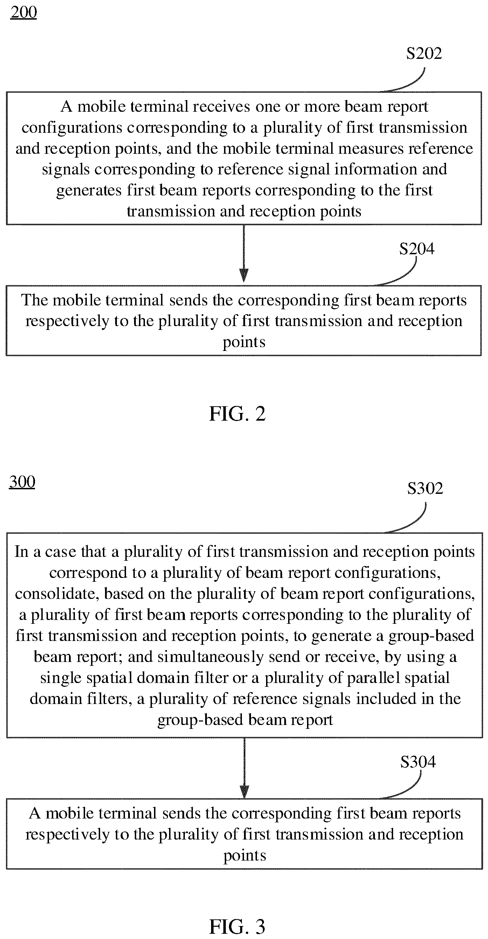

As shown in FIG. 2, an embodiment of the present invention provides a beam report transmission method 200. The method may be performed by a mobile terminal and/or a network device. In other words, the method may be performed by software or hardware installed in the mobile terminal and/or the network device. The method includes the following steps.

S202. A mobile terminal receives one or more beam report configurations corresponding to a plurality of first transmission and reception points, and the mobile terminal measures reference signals corresponding to reference signal information and generates first beam reports corresponding to the first transmission and reception points.

In one case, one of the plurality of first transmission and reception points sends, to the mobile terminal, one or more beam report configurations corresponding to the plurality of first transmission and reception points, where the one or more beam report configurations include reference signal information corresponding to the plurality of first transmission and reception points. In another case, the plurality of first transmission and reception points respectively send, to the mobile terminal, a plurality of beam report configurations corresponding to the plurality of first transmission and reception points, where the beam report configurations include reference signal information corresponding to the first transmission and reception points; and then one of the transmission and reception points sends association signaling to determine an association relationship between the plurality of beam report configurations. The mobile terminal receives the one or more beam report configurations corresponding to the plurality of first transmission and reception points.

In an implementation, a first transmission and reception point sends one beam report configuration to the mobile terminal, where the one beam report configuration includes reference signal information corresponding to the plurality of first transmission and reception points, that is, the one beam report configuration includes reference signal information corresponding to a TRP 1, a TRP 2, ..., a TRP n. The mobile terminal measures reference signal corresponding to the reference signal information to obtain a group-based beam report, where the group-based beam report includes reports of all reference signals corresponding to the TRP 1, the TRP 2, ..., the TRP n, and the mobile terminal divides the group-based beam report to obtain first beam reports corresponding to the TRP 1, the TRP 2, ..., the TRP n.

In another implementation, a first transmission and reception point sends L beam report configurations to the mobile terminal, where L is greater than 1, and one beam report configuration includes reference signal information corresponding to one first transmission and reception point, that is, L is equal to the number N of TRPs. For example, N=2, and L=2. The mobile terminal measures reference signals included in the L beam report configurations to obtain a group-based beam report, where the group-based beam report includes reports of all reference signals corresponding to the TRP 1, the TRP 2, ..., the TRP n, and the mobile terminal divides the group-based beam report to obtain first beam reports corresponding to the TRP 1, the TRP 2, ..., the TRP n.

In another implementation, a first transmission and reception point sends L beam report configurations to the mobile terminal, where L is greater than 1 but less than the number N of TRPs, that is, L1 beam report configurations in the L beam report configurations include reference signal information corresponding to one first transmission and reception point, L2 beam report configurations include reference signal information corresponding to the plurality of first transmission and reception point, and L1+L2=L. The terminal measures reference signals included in the L1 beam report configurations and reference signals included in the L2 beam report configurations to obtain a group-based beam report, and divides the group-based beam report to obtain first beam reports corresponding to the TRP 1, ..., the TRP n.

S204. The mobile terminal sends the corresponding first beam reports respectively to the plurality of first transmission and reception points.

In a multi-TRP scenario, the mobile terminal may send the corresponding first beam reports respectively to the plurality of first transmission and reception points, where the first beam reports are reports of reference signals corresponding to the first transmission and reception points. After a first transmission and reception point receives a corresponding first beam report, a beam used by the first transmission and reception point to transmit a channel or signal to the UE may be determined based on the first beam report.

In an implementation, in a case of one beam report configuration, the beam report configuration includes a plurality of beam report resources, the beam report resources correspond to one or more first transmission and reception points, and first beam reports of the first transmission and reception points corresponding to the beam report resources are sent on the beam report resources.

In another implementation, in a case of a plurality of beam report configurations, the beam report configuration includes one or more beam report resources, the beam report resources correspond to one or more first transmission and reception points, and first beam reports of the first transmission and reception points corresponding to the beam report resources are sent on the beam report resources.

In an implementation, in a case that the beam report configuration includes the plurality of beam report resources, the plurality of beam report resources are distinguished by using at least one of a physical uplink control channel (Physical Uplink Control Channel, PUCCH), a physical uplink shared channel (Physical Uplink Shared Channel, PUSCH), spatial relation information, a TCI, and a code point in a TCI, to obtain the beam report resources corresponding to the one or more first transmission and reception points. For example, the configuration includes a plurality of pieces of spatial relation information, or the spatial relation information is assigned a plurality of RSs or assigned a plurality of TCIs, or the TCI is assigned a plurality of code points (code point), where each code point includes one or more RSs.

In an implementation, in a case that the beam report configuration includes the plurality of beam report resources, this step may include: sequentially sending, on a part of the plurality of beam report resources, the first beam reports corresponding to the first transmission and reception points. For example, for sequential sending on L beam report resources, a corresponding beam report is sent on a first beam report resource in a first period, a corresponding beam report is sent on a second beam report resource in a second period, and so on.

In an implementation, in a case that the mobile terminal supports simultaneous sending, the first beam reports corresponding to the first transmission and reception points are simultaneously sent. For example, spatial domain resources for L3 beam reports in L beam reports are different. When the UE supports simultaneous sending of a plurality of beams, the UE can simultaneously send, to a plurality of TRPs, a plurality of beam reports corresponding to L3 beam report resources, where L3 is less than or equal to L. Optionally, different spatial domain resources may be different spatial relation information, or the spatial relation information is assigned a plurality of RSs or assigned a plurality of TCIs, or the TCI is assigned a plurality of code points, where each code point includes one or more RSs.

In an implementation, in a case that the beam report configuration includes the one beam report resource, the method further includes: sharing a frequency domain resource and dividing a time domain resource to divide the one beam report resource into the plurality of beam report resources. For example, L beam report resources are configured together, that is, the network actually configures only one beam report resource, and the network and/or the UE divide/divides the beam report resource into L beam report resources. The beam report resource may be shared in frequency domain and divided in time domain, for example, evenly divided in time domain. To be specific, a total time resource is T, first T/L of the time resource is a first beam report resource, T/L-2*T/L is a second beam report resource, and so on.

In an implementation, in the case of the plurality of beam report configurations, an association relationship between the plurality of beam report configurations is determined by using association signaling. For example, the network may configure additional signaling to associate the plurality of beam report configurations.

According to the beam report transmission method provided in this embodiment of the present invention, the corresponding first beam reports are respectively sent to the plurality of first transmission and reception points, where the first beam reports are the reports of the reference signals corresponding to the first transmission and reception points. Therefore, overheads of the beam reports can be reduced on a basis of guaranteeing transmission and reception performance.

According to the beam report transmission method provided in this embodiment of the present invention, the one or more beam report configurations corresponding to the plurality of first transmission and reception points are received, where the beam report configurations include the reference signal information corresponding to the plurality of first transmission and reception points; and the reference signals corresponding to the reference signal information are measured to obtain the first beam reports corresponding to the first transmission and reception points. An appropriate signaling configuration is designed to reduce the overheads of the beam reports on the basis of guaranteeing transmission and reception performance.

According to the beam report transmission method provided in this embodiment of the present invention, in the case of one beam report configuration, the beam report configuration includes a plurality of beam report resources, or in the case of a plurality of beam report configurations, the beam report configuration includes one or more beam report resources and the beam report resources correspond to one or more first transmission and reception points, and the sending corresponding first beam reports respectively to the plurality of first transmission and reception points includes: sending, on the beam report resources, the first beam reports of the first transmission and reception points corresponding to the beam report resources. An appropriate signaling configuration is designed to reduce the overheads of the beam reports on the basis of guaranteeing transmission and reception performance.

As shown in FIG. 3, an embodiment of the present invention provides a beam report transmission method 300. The method may be performed by a mobile terminal. In other words, the method may be performed by software or hardware installed in the mobile terminal. The method includes the following steps.

S302. In a case that a plurality of first transmission and reception points correspond to a plurality of beam report configurations, consolidate, based on the plurality of beam report configurations, a plurality of first beam reports corresponding to the plurality of first transmission and reception points, to generate a group-based beam report; and simultaneously send or receive, by using a single spatial domain filter or a plurality of parallel spatial domain filters, a plurality of reference signals included in the group-based beam report.

In this step, when beam management is performed, a plurality of TRPs can be considered in beam quality calculation, thereby guaranteeing transmission and reception performance. The UE may simultaneously send or receive RSs included in the plurality of beam report configurations. In a subsequent step, when performing group-based beam report (groupBasedBeam-Reporting) reporting, the UE divides the RSs that can be simultaneously received or sent into a plurality of first beam reports, and sends the plurality of first beam reports on corresponding beam report resources respectively to corresponding TRPs. Therefore, overheads of the beam reports are reduced.

In this step, the plurality of first beam reports corresponding to the plurality of first transmission and reception points may be consolidated based on an anchor point, to generate the group-based beam report, where the anchor point is at least one of the beam report resources. In other words, statistics collection in a complete groupBasedBeamReporting process starts from the anchor point and ends in presence of a next anchor point. When the plurality of first transmission and reception points correspond to the plurality of first beam reports, there are problems such as different time domain periods of RSs included in these beam reports or beam report configurations and frequency domain resource collisions or spatial domain resource collisions, and which of the beam report configurations is dominant. Therefore, to resolve the problems, an anchor point is required to determine the start and end of the complete groupBasedBeamReporting process. For example, in the plurality of beam report configurations, if different beam report configurations are dominant or different beam report configurations are used as the start of the groupBasedBeamReporting, different groupBased-BeamReportings may be obtained, that is, RSs included in the groupBasedBeamReporting and beam quality of the RSs may be different. An anchor point is required to resolve the disagreement.

In an implementation, if periods of the plurality of beam report configurations (report setting) are different, in the complete groupBasedBeamReporting process, only a latest beam report is used for each report setting, and an old beam report is replaced.

In an implementation, the anchor point is determined by an identity of the first transmission and reception point.

The identity of the first transmission and reception point includes at least one of a transmission and reception point having an identity of 0 (TRP ID=0), a transmission and reception point having a largest identity (highest TRP ID), a transmission and reception point having a smallest identity (lowest TRP ID), a transmission and reception point associated with a control resource set having an identity of 0 (CORESET 0), a transmission and reception point associated with a control resource set having a largest identity (highest CORESET ID), a transmission and reception point associated with a control resource set having a smallest identity (lowest CORESET ID), a transmission and reception point indicated by a network, and a transmission and reception point reported by the user equipment. The TRP ID is a control resource set pool index CORESETPoolIndex in the CORESET, or the TRP corresponds to a physical cell ID or another ID that represents the TRP.

In an implementation, the anchor point is determined by a resource or configuration indicated by a network or reported by the mobile terminal.

In an implementation, the anchor point is determined by the beam report resource or the beam report configuration.

The beam report resource or the beam report configuration includes at least one of a first or last configured resource or configuration, a frequency domain resource in the beam report resource or the beam report configuration, a time domain resource in the beam report resource or the beam report configuration, spatial relation information in the beam report resource or the beam report configuration, a transmission configuration indicator, or a reference signal in a transmission configuration indicator.

Optionally, the frequency domain resource in the beam report resource or the beam report configuration includes at least one of a lowest frequency domain resource in the beam report resource or the beam report configuration, a highest frequency domain resource in the beam report resource or the beam report configuration, a frequency domain resource with most resources in the beam report resource or the beam report configuration, for example, a frequency domain resource with most resource elements (Resource element, RE), and a frequency domain resource with fewest resources in the beam report resource or the beam report configuration.

Optionally, the time domain resource in the beam report resource or the beam report configuration includes at least one of a time domain resource at a farthest time in the beam report resource or the beam report configuration, a time domain resource at a closest time in the beam report resource or the beam report configuration, a time domain resource with most resources in the beam report resource or the beam report configuration, for example, most orthogonal frequency division multiplexing (Orthogonal frequency division multiplex OFDM) symbols, symbols (symbol), and slots (slot), and a time domain resource with fewest resources in the beam report resource or the beam report configuration.

Optionally, the spatial relation information in the beam report resource or the beam report configuration or the reference signal in the transmission configuration indicator includes at least one of a quasi-colocation (Quasi-colocation, QCL) RS of a CORESET, where the CORESET is, for example, a CORESET whose CORESET ID is equal to 0, a CORESET with a lowest CORESET ID, or a CORESET with a highest CORESET ID; a TCI activated at a latest time or an RS in the TCI, a TCI used at a latest time or an RS in the TCI, or a TCI configured at a latest time or an RS in the TCI; an RS with best beam quality in a previous beam report; a frequency domain resource of an RS, for example, a frequency domain resource with lowest ID, highest ID, most, or fewest resources; a time domain resource of an RS, for example, a time domain resource at a farthest time, a time domain resource at a latest time, a time domain resource with most resources, or a time domain resources with fewest resources; a largest RS ID; a smallest RS ID; a preferential SSB; or a preferential CSI-RS.

In an implementation, in a case that a report parameter in the first beam report and/or the group-based beam report is a cri-SINR or a cri-reference signal received power (RSRP) or an ssb-Index-SINR or an ssb-Index-RSRP or an sri-SINR or an sri-RSRP, the report parameter is measured based on a reference signal in the group-based beam report.

In an implementation, a reference signal referenced during a beam measurement in the group-based beam report is at least one of a reference signal at a time closest to the beam report resource, a reference signal at a latest time before a start of the group-based beam report, and a reference signal in the group-based beam report. During calculation of the reference signal at the time closest to the beam report resource, that is, when determining a beam report resource, a current time is referenced to select the RS at the latest time and another beam report or a configured RS.

In an implementation, regarding calculation of the SINR, one reference signal in the first beam report and/or the group-based beam report corresponds to a plurality of signal-to-noise ratios.

Considering a combination of simultaneous transmission or sending by different TRPs, for example, for a scenario in which two antenna panels (Panel) are configured for two TRPs or UEs, one RS can report up to two SINRs, that is, another TRP or panel performs transmission or does not perform transmission.

For a scenario in which N Panels are configured for N TRPs or UEs, one RS can report up to $2^{(N-1)}$ SINRs, where N is greater than 1. For example, when N=3, the other two TRPs or panels are denoted as A and B. Because $2^{(3-1)}$ is equal to 4, there are four cases at this time, that is, A performs transmission and B performs transmission, A performs transmission and B does not perform transmission, A does not perform transmission and B performs transmission, and A does not perform transmission and B does not perform transmission.

If the number of TRPs is not equal to the number of panels configured for the UE, the maximum number of SINRs that can be reported by one RS is determined based on at least one of the number of TRPs, the number of panels, and the smaller or larger one of the number of TRPs and the number of panels. Therefore, this embodiment of the present invention provides a beam report transmission method and provides an appropriate and effective solution for reporting an SINR.

A capability of processing channel state information (Channel State Information, CSI) reporting by the UE, that is, the supported number $N_{CPU}$ of simultaneous calculations of CSI, needs to be reported to the network. If one UE supports $N_{CPU}$ simultaneous calculations of CSI, it means that the UE has $N_{CPU}$ CSI processing units (CSI processing unit, CPU) for processing CSI reports of all configured cells.

Number of available CPUs: On an OFDM symbol, if L CPUs are already occupied to process CSI reports, the UE still has $N_{CPU} - L$ available CPUs. If N CSI reports on the OFDM symbol need to start occupying CPUs, and CSI reports n=0, ..., N-1 need to occupy $O_{CPU}^{(n)}$ CPUs, it is possible that the number of available CPUs is less than the number of CPUs that the N CSI reports need to occupy. In this case, the UE does not need to update (N-M) low-priority CSI reports, where $0 \leq M \leq N$ is a maximum value satisfing

$$\sum_{n=0}^{M-1} O_{CPU}^{(n)} \leq N_{CPU} - L$$

.

In an implementation, a CPU occupation time corresponding to the step of consolidating a plurality of first beam reports corresponding to the plurality of first transmission and reception points to generate a group-based beam report is at least one of the following:

occupation time 1: in a case of periodic or semi-persistent CSI and in a case that a report parameter is not empty, a start symbol occupying a CPU is an earliest symbol in each CSI-RS or CSI-interference measurement (CSI-IM) or SSB resource for CSI-RS or CSI-IM or SSB transmission of a last channel or interference measurement before the group-based beam report, and/or an end symbol is a last symbol of a last uplink channel for transmitting the group-based beam report;

occupation time 2: in a case of aperiodic CSI and first transmission of a physical uplink shared channel (Physical Uplink Shared Channel, PUSCH)-based semi-persistent CSI report activated by a physical downlink control channel (Physical downlink control channel, PDCCH) and in a case that a report parameter is not empty, a start symbol occupying a CPU is a first symbol after a PDCCH triggering a first CSI report of the group-based beam report, and/or an end symbol is a last symbol of a last PUSCH for transmitting the group-based beam report;

occupation time 3: a start symbol is an earliest symbol for periodic or semi-persistent (P/SP) CSI-RS/SSB transmission in a channel measurement for calculating L1-RSRP in the last group-based beam report, and/or an end symbol is Z3 symbols after a last symbol for CSI-RS/SSB transmission in a channel measurement for calculating L1-RSRP in the last group-based beam report; and

occupation time 4: in a case of aperiodic CSI and in a case that a report parameter is null and that trs-Infor is not configured, a start symbol occupying a CPU is a first symbol after a PDCCH triggering a first CSI report of the group-based beam report, and/or an end symbol is a last one of any one or more of the following symbols 1 to 3:

symbol 1: $Z_3$ symbols after a first symbol after a PDCCH triggering a first CSI report of the group-based beam report;

symbol 2: $Z_3$ symbols after a first symbol after a PDCCH triggering a last CSI report of the group-based beam report; and

symbol 3: $Z_3'$ symbols after a last symbol for CSI-RS/SSB transmission in a channel measurement for calculating L1-RSRP in the last group-based beam report.

In an implementation, the first transmission of the PUSCH-based semi-persistent CSI (Semi-Persistent CSI, SP-CSI) report activated by the PDCCH is not applicable to the occupation time 1. In an implementation, the first transmission of the PUSCH-based semi-persistent CSI report activated by the PDCCH is applicable to the occupation time 2. In an implementation, the first transmission of the PUSCH-based semi-persistent CSI report activated by the PDCCH is not applicable to the occupation time 3.

Therefore, this embodiment of the present invention provides a beam report transmission method and provides an appropriate and effective solution for measuring a CPU.

S304. The mobile terminal sends the corresponding first beam reports respectively to the plurality of first transmission and reception points.

The description of this step may be similar to that of step S104 in the embodiment in FIG. 1 or step S204 in the embodiment in FIG. 2, and is not repeated herein again. Before this step, a step similar to step S202 in the embodiment in FIG. 2 may also be included, and is not described herein again.

According to the beam report transmission method provided in this embodiment of the present invention, the corresponding first beam reports are respectively sent to the plurality of first transmission and reception points, where the first beam reports are the reports of the reference signals corresponding to the first transmission and reception points. Therefore, overheads of the beam reports can be reduced on a basis of guaranteeing transmission and reception performance.

According to the beam report transmission method provided in this embodiment of the present invention, the plurality of first beam reports corresponding to the plurality of first transmission and reception points are consolidated based on the anchor point to generate the group-based beam report, where the anchor point is at least one of the beam report resources. In beam management, a plurality of TRPs can be considered in beam quality calculation, thereby guaranteeing transmission and reception performance.

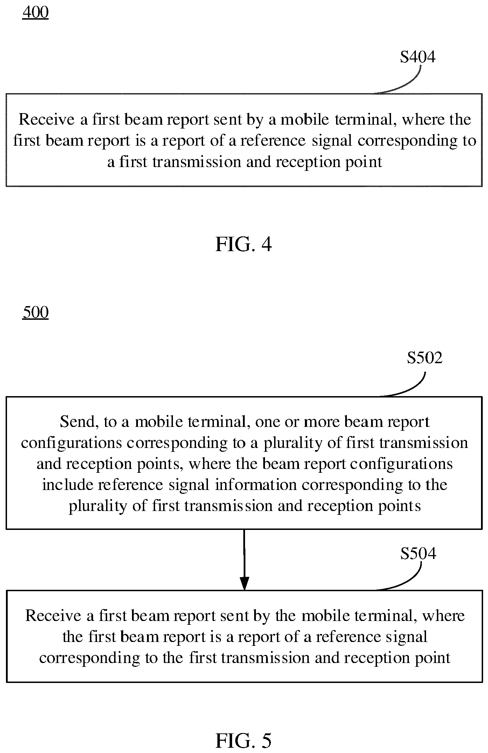

The beam report transmission method according to the embodiment of the present invention is described in detail above with reference to FIG. 1. A beam report transmission method according to another embodiment of the present invention is hereinafter described in detail with reference to FIG. 4. It may be understood that the description of interaction between the network device and the mobile terminal from the network device side is the same as the description on the mobile terminal side in the method shown in FIG. 1. To avoid repetition, related descriptions are appropriately omitted.

FIG. 4 is a beam report transmission method 400 according to an embodiment of the present invention. The method may be applied to a network device. The network device is at least one of a plurality of TRPs. As shown in FIG. 4, the method 400 includes the following step.

S404. Receive a first beam report sent by a mobile terminal, where the first beam report is a report of a reference signal corresponding to the first transmission and reception point.

The description of this step may be similar or corresponding to that of step S102 in the embodiment in FIG. 1. It may be understood that the description of interaction between the network device and the mobile terminal from the network device side is the same as the description on the mobile terminal side in the method shown in FIG. 1. To avoid repetition, related descriptions are appropriately omitted.

According to the beam report transmission method provided in this embodiment of the present invention, the first beam report sent by the mobile terminal is received, where the first beam report is the report of the reference signal corresponding to the first transmission and reception point. Therefore, overheads of beam reports can be reduced on a basis of guaranteeing transmission and reception performance.

FIG. 5 is a beam report transmission method 500 according to an embodiment of the present invention. The method may be applied to a network device. The network device is at least one of a plurality of TRPs. As shown in FIG. 5, the method 500 includes the following steps.

S502. Send, to a mobile terminal, one or more beam report configurations corresponding to a plurality of first transmission and reception points, where the beam one or more report configurations include reference signal information corresponding to the plurality of first transmission and reception points.

In a case of one beam report configuration, the beam report configuration includes a plurality of beam report resources, or in a case of a plurality of beam report configurations, the beam report configuration includes one or more beam report resources.

In the case of the plurality of beam report configurations, an association relationship between the plurality of beam report configurations is determined by using association signaling.

In a case that the beam report configuration includes the plurality of beam report resources and in a case that the mobile terminal supports simultaneous sending, the plurality of first transmission and reception points simultaneously receive corresponding first beam reports.

In the case of the plurality of beam report configurations, an association relationship between the plurality of beam report configurations is determined by using association signaling.

When a report parameter in the first beam report is a cri-SINR or a cri-RSRP or an ssb-Index-SINR or an ssb-Index-RSRP or an sri-SINR or an sri-RSRP, the report parameter is measured based on a reference signal in the first beam report; and/or one reference signal in the first beam report corresponds to a plurality of signal-to-noise ratios.

The description of this step may be similar or corresponding to that of step S202 in the embodiment in FIG. 2. It may be understood that the description of interaction between the network device and the mobile terminal from the network device side is the same as the description on the mobile terminal side in the method shown in FIG. 2. To avoid repetition, related descriptions are appropriately omitted.

S504. Receive a first beam report sent by the mobile terminal, where the first beam report is a report of a reference signal corresponding to the first transmission and reception point.

In a case that the beam report configuration includes the plurality of beam report resources, the receiving a first beam report sent by the mobile terminal includes: sequentially receiving, on a part of the plurality of beam report resources, first beam reports corresponding to the first transmission and reception points.

The description of this step may be similar or corresponding to that of step S 102 in the embodiment in FIG. 1. It may be understood that the description of interaction between the network device and the mobile terminal from the network device side is the same as or corresponding to the description on the mobile terminal side in the method shown in FIG. 1, with the same or corresponding technical effect achieved. To avoid repetition, related descriptions are appropriately omitted.

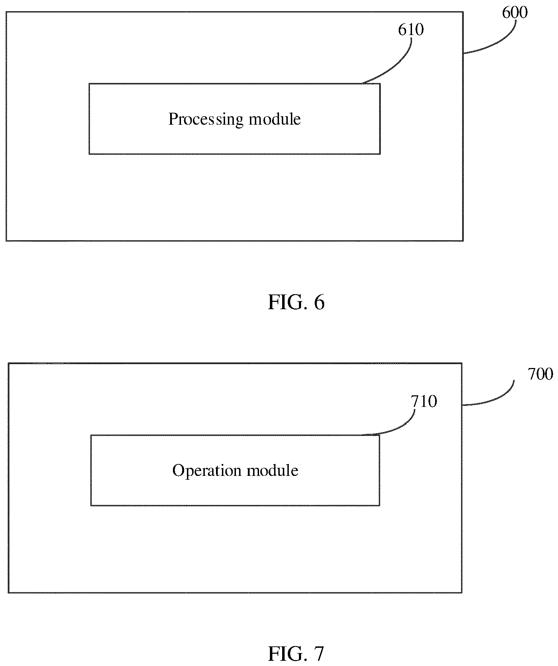

FIG. 6 is a schematic structural diagram of a mobile terminal according to an embodiment of the present invention. As shown in FIG. 6, the mobile terminal 600 includes a processing module 610.

The processing module 610 is configured to send corresponding first beam reports respectively to a plurality of first transmission and reception points, where the first beam reports are reports of reference signals corresponding to the first transmission and reception points.

In an implementation, before sending the corresponding first beam reports respectively to the plurality of first transmission and reception points, the processing module 610 is configured to receive one or more beam report configurations corresponding to the plurality of first transmission and reception points, where the one or more beam report configurations include reference signal information corresponding to the plurality of first transmission and reception points; and measure reference signals corresponding to the reference signal information, and generate the first beam reports corresponding to the first transmission and reception points.

In an implementation, in a case of one beam report configuration, the beam report configuration includes a plurality of beam report resources, or in a case of a plurality of beam report configurations, the beam report configuration includes one or more beam report resources and the beam report resources correspond to one or more first transmission and reception points, and the processing module 610 is configured to send, on the beam report resources, the first beam reports of the first transmission and reception points corresponding to the beam report resources.

In an implementation, in a case that the beam report configuration includes the plurality of beam report resources, the processing module 610 is configured to distinguish the plurality of beam report resources by using at least one of a physical uplink control channel, a physical uplink shared channel, spatial relation information, a transmission configuration indicator, and a code point in a transmission configuration indicator.

In an implementation, in a case that the beam report configuration includes the plurality of beam report resources, the processing module 610 is configured to: sequentially send, on a part of the plurality of beam report resources, the first beam reports corresponding to the first transmission and reception points; and/or in a case that the mobile terminal supports simultaneous sending, simultaneously send the first beam reports corresponding to the first transmission and reception points.

In an implementation, in a case that the beam report configuration includes the one beam report resource, the processing module 610 is configured to share a frequency domain resource and divide a time domain resource to divide the one beam report resource into the plurality of beam report resources.

In an implementation, in the case of the plurality of beam report configurations, the processing module 610 is configured to determine an association relationship between the plurality of beam report configurations by using association signaling.

In an implementation, before sending the corresponding first beam reports respectively to the plurality of first transmission and reception points, the processing module 610 is configured to: in a case that the plurality of first transmission and reception points correspond to a plurality of beam report configurations, consolidate, based on the plurality of beam report configurations, the plurality of first beam reports corresponding to the plurality of first transmission and reception points, to generate a group-based beam report.

In an implementation, after generating the group-based beam report, the processing module 610 is configured to simultaneously send or receive, by using a single spatial domain filter or a plurality of parallel spatial domain filters, a plurality of reference signals included in the group-based beam report.

In an implementation, the processing module 610 is configured to consolidate, based on an anchor point, the plurality of first beam reports corresponding to the plurality of first transmission and reception points, to generate the group-based beam report, where the anchor point is at least one of the beam report resources.

In an implementation, the anchor point is determined by an identity of the first transmission and reception point, where the identity of the first transmission and reception point includes at least one of a transmission and reception point having an identity of 0, a transmission and reception point having a largest identity, a transmission and reception point having a smallest identity, a transmission and reception point associated with a control resource set having an identity of 0, a transmission and reception point associated with a control resource set having a largest identity, a transmission and reception point associated with a control resource set having a smallest identity, a transmission and reception point indicated by a network, and a transmission and reception point reported by user equipment; or the anchor point is determined by a resource or configuration indicated by a network or reported by the mobile terminal; or the anchor point is determined by the beam report resource or the beam report configuration, where the beam report resource or the beam report configuration includes at least one of a first or last configured resource or configuration, a frequency domain resource in the beam report resource or the beam report configuration, a time domain resource in the beam report resource or the beam report configuration, spatial relation information in the beam report resource or the beam report configuration, or a reference signal in a transmission configuration indicator.

In an implementation, when a report parameter in the first beam report and/or the group-based beam report is a cri-SINR or a cri-RSRP or an ssb-Index-SINR or an ssb-Index-RSRP or an sri-SINR or an sri-RSRP, the report parameter is measured based on a reference signal in the first beam report and/or the group-based beam report; and/or one reference signal in the first beam report and/or the group-based beam report corresponds to a plurality of signal-to-noise ratios.

In an implementation, a reference signal referenced during a beam measurement in the group-based beam report is at least one of a reference signal at a time closest to the beam report resource, a reference signal at a latest time before a start of the group-based beam report, and a reference signal in the group-based beam report.

In an implementation, a CPU occupation time corresponding to the step of consolidating the plurality of first beam reports corresponding to the plurality of first transmission and reception points to generate a group-based beam report by the processing module 610 is at least one of the following: in a case of periodic or semi-persistent CSI and in a case that a report parameter is not empty, a start symbol occupying a CPU is an earliest symbol in each CSI-RS or CSI-IM or SSB resource for CSI-RS or CSI-IM or SSB transmission of a last channel or interference measurement before the group-based beam report, and/or an end symbol is a last symbol of a last uplink channel for transmitting the group-based beam report; in a case of aperiodic CSI and first transmission of a PUSCH-based semi-persistent CSI report activated by a PDCCH and in a case that a report parameter is not empty, a start symbol occupying a CPU is a first symbol after a PDCCH triggering a first CSI report of the group-based beam report, and/or an end symbol is a last symbol of a last PUSCH for transmitting the group-based beam report; in a case of semi-persistent CSI and in a case that a report parameter is not empty and that trs-Infor is not configured, a start symbol occupying a CPU is an earliest symbol for P/SP CSI-RS/SSB transmission in a channel measurement for calculating L1-RSRP in the last group-based beam report, and/or an end symbol is $Z3$ symbols after a last symbol for CSI-RS/SSB transmission in a channel measurement for calculating L1-RSRP in the last group-based beam report; and in a case of aperiodic CSI and in a case that a report parameter is null and that trs-Infor is not configured, a start symbol occupying a CPU is a first symbol after a PDCCH triggering a first CSI report of the group-based beam report, and/or an end symbol is a last one of any one or more of the following symbols: $Z_3$ symbols after a first symbol after a PDCCH triggering a first CSI report of the group-based beam report; $Z_3$ symbols after a first symbol after a PDCCH triggering a last CSI report of the group-based beam report; and Z3 symbols after a last symbol for CSI-RS/SSB transmission in a channel measurement for calculating L1-RSRP in the last group-based beam report.

For the mobile terminal 600 in this embodiment of the present invention, refer to the processes of the methods 100 to 300 in the corresponding embodiments of the present invention. In addition, the units/modules of the mobile terminal 600 and other operations and/or functions described above are respectively used to implement the corresponding processes in the methods 100 to 300, with the same or equivalent technical effects achieved. For brevity, details are not described herein again.

FIG. 7 is a schematic structural diagram of a network device according to an embodiment of the present invention. As shown in FIG. 7, the network device 700 includes an operation module 710.

The operation module 710 is configured to receive a first beam report sent by a mobile terminal, where the first beam report is a report of a reference signal corresponding to the first transmission and reception point.

In an implementation, before receiving the first beam report sent by the mobile terminal, the operation module 710 is configured to send, to the mobile terminal, one or more beam report configurations corresponding to a plurality of first transmission and reception points, where the one or more beam report configurations include reference signal information corresponding to the plurality of first transmission and reception points.

In an implementation, in a case of one beam report configuration, the beam report configuration includes a plurality of beam report resources, or in a case of a plurality of beam report configurations, the beam report configuration includes one or more beam report resources.

In an implementation, in the case of the plurality of beam report configurations, an association relationship between the plurality of beam report configurations is determined by using association signaling.

In an implementation, in a case that the beam report configuration includes the plurality of beam report resources, the operation module 710 is configured to: sequentially receive, on a part of the plurality of beam report resources, first beam reports corresponding to the first transmission and reception points; and/or in a case that the mobile terminal supports simultaneous sending, simultaneously receive corresponding first beam reports by the plurality of first transmission and reception points.

In an implementation, in the case of the plurality of beam report configurations, the operation module 710 is configured to determine an association relationship between the plurality of beam report configurations by using association signaling.

In an implementation, when a report parameter in the first beam report is a cri-SINR or a cri-RSRP or an ssb-Index-SINR or an ssb-Index-RSRP or an sri-SINR or an sri-RSRP, the report parameter is measured based on a reference signal in the first beam report; and/or one reference signal in the first beam report corresponds to a plurality of signal-to-noise ratios.

For the network device 700 in this embodiment of the present invention, refer to the processes of the methods 400 and 500 in the corresponding embodiments of the present invention. In addition, the units/modules of the network device 700 and other operations and/or functions described above are respectively used to implement the corresponding processes in the methods 400 and 500, with the same or equivalent technical effects achieved. For brevity, details are not described herein again.

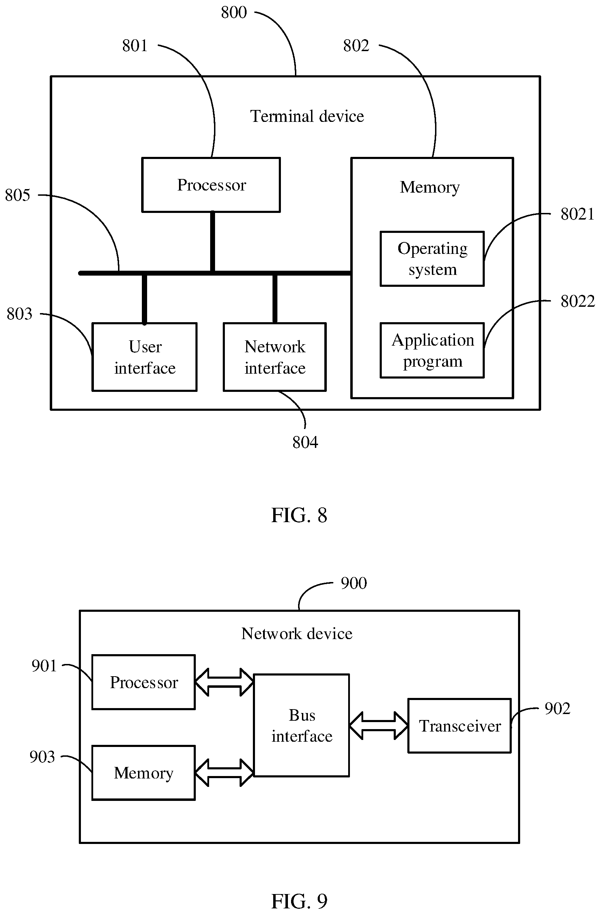

FIG. 8 is a block diagram of a mobile terminal according to another embodiment of the present invention. The mobile terminal 800 shown in FIG. 8 includes at least one processor 801, a memory 802, at least one network interface 804, and a user interface 803. The components in the mobile terminal 800 are coupled together through a bus system 805. It may be understood that the bus system 805 is configured to implement connection and communication between these components. In addition to a data bus, the bus system 805 further includes a power bus, a control bus, and a status signal bus. However, for clarity of description, various buses are marked as the bus system 805 in FIG. 8.

The user interface 803 may include a display, a keyboard, a pointing device (for example, a mouse or a trackball (trackball)), a touch panel, or a touchscreen.

It may be understood that the memory 802 in this embodiment of the present invention may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM) and is used as an external cache. As exemplary rather than restrictive description, many forms of RAMs can be used, such as a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synchlink DRAM, SLDRAM), and a direct Rambus random access memory (Direct Rambus RAM, DRRAM). The memory 802 in a system and method described in this embodiment of the present invention is intended to include but is not limited to these and any other suitable types of memories.

In some embodiments, the memory 802 stores the following elements: executable modules or data structures, or a subset thereof, or an extended set thereof: an operating system 8021 and an application program 8022.

The operating system 8021 includes various system programs, such as a framework layer, a core library layer, and a driver layer, for implementing various basic services and processing hardware-based tasks. The application program 8022 includes various application programs, such as a media player (Media Player), and a browser

(Browser), and is configured to implement various application services. A program for implementing the method in this embodiment of the present invention may be included in the application program 8022.

In this embodiment of the present invention, the mobile terminal 800 further includes a computer program stored in the memory 802 and capable of running on the processor 801. When being executed by the processor 801, the computer program implements the steps of the methods 100 to 300.

The foregoing methods disclosed by the embodiments of the present invention may be applied to the processor 801, or implemented by the processor 801. The processor 801 may be an integrated circuit chip that has a signal processing capability. During implementation, the steps of the foregoing methods may be completed by hardware integrated logic circuits in the processor 801 or instructions in a form of software. The foregoing processor 801 may be a general processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a discrete gate or transistor logic device, or a discrete hardware component. The processor may implement or perform the methods, steps, and logical block diagrams that are disclosed in the embodiments of the present invention. The general-purpose processor may be a microprocessor, or the processor may be any conventional processor or the like. The steps of the methods disclosed with reference to the embodiments of the present invention may be directly performed and completed by using a hardware decoding processor, or may be performed and completed by using a combination of hardware and a software module in a decoding processor. The software module may be located in a computer-readable storage medium that is mature in the art, such as a random access memory, a flash memory, a read-only memory, a programmable read-only memory or electrically erasable programmable memory, or a register. The computer-readable storage medium is located in the memory 802, and the processor 801 reads information in the memory 802, and completes the steps of the foregoing methods in combination with its hardware. Specifically, a computer program is stored in the computer-readable storage medium, and when the computer program is executed by the processor 801, the steps of the embodiments of the foregoing methods 100 to 300 are implemented.

It may be understood that the embodiments described in the embodiments of the present invention may be implemented by hardware, software, firmware, middleware, microcode, or a combination thereof. For hardware implementation, the processing unit may be implemented in one or more application specific integrated circuits (Application Specific Integrated Circuit, ASIC), digital signal processors (Digital Signal Processing, DSP), digital signal processing devices (DSP Device, DSPD), programmable logic devices (Programmable Logic Device, PLD), field-programmable gate arrays (Field-Programmable Gate Array, FPGA), general purpose processors, controllers, microcontrollers, microprocessors, and other electronic units for performing the functions described in this application, or a combination thereof.

For software implementation, the technologies described in the embodiments of the present invention may be implemented by modules (for example, processes or functions) that perform the functions described in the embodiments of the present invention. Software code may be stored in the memory and executed by the processor. The memory may be implemented in or outside the processor.

The mobile terminal 800 can implement the processes that are implemented by the mobile terminal in the foregoing embodiments, with the same or equivalent technical effects achieved. To avoid repetition, details are not described herein again.

FIG. 9 is a structural diagram of a network device to which an embodiment of the present invention is applied. The network device can implement details of the method embodiments 400 to 500, with the same effect achieved. As shown in FIG. 9, the network device 900 includes a processor 901, a transceiver 902, a memory 903, and a bus interface.

In this embodiment of the present invention, the network device 900 further includes a computer program stored in the memory 903 and capable of running on the processor 901. When the computer program is executed by the processor 901, the steps of the methods 400 and 500 are implemented.

In FIG. 9, a bus architecture may include any quantity of interconnect buses and bridges, and specifically connects together circuits that are of one or more processors represented by the processor 901 and of a memory represented by the memory 903. The bus architecture may further interconnect various other circuits such as a peripheral device, a voltage regulator, and a power management circuit. These are all well known in the art, and therefore are not further described in this specification. The bus interface provides an interface. The transceiver 902 may be a plurality of components, including a transmitter and a receiver, and provides units for communicating with a variety of other apparatuses on a transmission medium.

The processor 901 is responsible for management of the bus architecture and general processing, and the memory 903 is capable of storing data that is used by the processor 901 during operation.

An embodiment of the present invention further provides a computer-readable storage medium, where a computer program is stored in the computer-readable storage medium, and when the computer program is executed by a processor, the processes of the method embodiments 100 to 300 and/or the method embodiments 400 and 500 are implemented, with the same technical effect achieved. To avoid repetition, details are not described herein again. The computer-readable storage medium is, for example, a read-only memory (Read-Only Memory, ROM for short), a random access memory (Random Access Memory, RAM for short), a magnetic disk, or an optical disc.

It should be noted that in this specification, the term "comprise", "include", or any other variant thereof is intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element.

According to the foregoing description of the implementations, a person skilled in the art may clearly understand that the methods in the foregoing embodiments may be implemented by using software in combination with a necessary common hardware platform, and certainly may alternatively be implemented by using hardware. However, in most cases, the former is a preferred implementation. Based on such an understanding, the technical solutions of the present invention essentially, or the part contributing to the prior art may be implemented in a form of a software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of the present invention.

The embodiments of the present invention are described above with reference to the accompanying drawings. However, the present invention is not limited to the foregoing specific embodiments. The foregoing specific embodiments are only illustrative rather than restrictive. Inspired by the present invention, a person of ordinary skill in the art can still derive a plurality of variations without departing from the essence of the present invention and the protection scope of the claims. All these variations shall fall within the protection scope of the present invention.

## Claims

1. A beam report transmission method, wherein the method is performed by a mobile terminal, and the method comprises:
   sending corresponding first beam reports respectively to a plurality of first transmission and reception points, wherein the first beam reports are reports of reference signals corresponding to the first transmission and reception points.

2. The method according to claim 1, wherein before the sending corresponding first beam reports respectively to a plurality of first transmission and reception points, the method further comprises:

   receiving one or more beam report configurations corresponding to the plurality of first transmission and reception points, wherein the one or more beam report configurations comprise reference signal information corresponding to the plurality of first transmission and reception points; and
   measuring reference signals corresponding to the reference signal information, and generating the first beam reports corresponding to the first transmission and reception points.

3. The method according to claim 2, wherein in a case of one beam report configuration, the beam report configuration comprises a plurality of beam report resources, or in a case of a plurality of beam report configurations, the beam report configuration comprises one or more beam report resources and the beam report resources correspond to one or more first transmission and reception points, and the sending corresponding first beam reports respectively to a plurality of first transmission and reception points comprises:
   sending, on the beam report resources, the first beam reports of the first transmission and reception points corresponding to the beam report resources.

4. The method according to claim 3, wherein in a case that the beam report configuration comprises the plurality of beam report resources, the plurality of beam report resources are distinguished by using at least one of physical uplink control channel, physical uplink shared channel, spatial relation information, transmission configuration indicator, and code point in a transmission configuration indicator.

5. The method according to claim 3, wherein in a case that the beam report configuration comprises the plurality of beam report resources, the sending corresponding first beam reports respectively to a plurality of first transmission and reception points comprises:

   sequentially sending, on a part of the plurality of beam report resources, the first beam reports corresponding to the first transmission and reception points; and/or
   in a case that the mobile terminal supports simultaneous sending, simultaneously sending the first beam reports corresponding to the first transmission and reception points.

6. The method according to claim 3, wherein in a case that the beam report configuration comprises the one beam report resource, the method further comprises:
   sharing a frequency domain resource and dividing a time domain resource to divide the one beam report resource into the plurality of beam report resources.

7. The method according to claim 3, wherein in the case of the plurality of beam report configurations, an association relationship between the plurality of beam report configurations is determined by using association signaling.

8. The method according to claim 2, wherein before the sending corresponding first beam reports respectively to a plurality of first transmission and reception points, the method further comprises:
   in a case that the plurality of first transmission and reception points correspond to a plurality of beam report configurations, consolidating, based on the plurality of beam report configurations, the plurality of first beam reports corresponding to the plurality of first transmission and reception points, to generate a group-based beam report.

9. The method according to claim 8, wherein after the generating a group-based beam report, the method further comprises:
   simultaneously sending or receiving, by using a single spatial domain filter or a plurality of parallel spatial domain filters, a plurality of reference signals comprised in the group-based beam report.

10. The method according to claim 9, wherein the consolidating, based on the plurality of beam report configurations, the plurality of first beam reports corresponding to the plurality of first transmission and reception points, to generate a group-based beam report comprises:
    consolidating, based on an anchor point, the plurality of first beam reports corresponding to the plurality of first transmission and reception points, to generate the group-based beam report, wherein the anchor point is at least one of beam report resources.

11. The method according to claim 10, wherein the anchor point is determined by an identity of the first transmission and reception point, wherein the the first transmission and reception point comprises at least one of a transmission and reception point having an identity of 0, a transmission and reception point having a largest identity, a transmission and reception point having a smallest identity, a transmission and reception point associated with a control resource set having an identity of 0, a transmission and reception point associated with a control resource set having a largest identity, a transmission and reception point associated with a control resource set having a smallest identity, a transmission and reception point indicated by a network, and a transmission and reception point reported by user equipment; or

the anchor point is determined by a resource or configuration indicated by a network or reported by the mobile terminal; or
the anchor point is determined by the beam report resource or the beam report configuration, wherein the beam report resource or the beam report configuration comprises at least one of a first or last configured resource or configuration, a frequency domain resource in the beam report resource or the beam report configuration, a time domain resource in the beam report resource or the beam report configuration, spatial relation information in the beam report resource or the beam report configuration, or a reference signal in a transmission configuration indicator.

12. The method according to claim 8, wherein in a case that a report parameter in the first beam report and/or the group-based beam report is a channel state information reference signal resource indicator cri-signal to interference plus noise ratio SINR or a synchronization signal and PBCH block ssb-index Index-SINR or a sounding reference signal resource sri-SINR, the report parameter is measured based on a reference signal in the first beam report and/or the group-based beam report; and/or one reference signal in the first beam report and/or the group-based beam report corresponds to a plurality of signal-to-noise ratios.

13. The method according to claim 8, wherein a reference signal referenced during a beam measurement in the group-based beam report is at least one of a reference signal at a time closest to the beam report resource, a reference signal at a latest time before a start of the group-based beam report, and a reference signal in the group-based beam report.

14. The method according to claim 8, wherein a CPU occupation time corresponding to the step of consolidating the plurality of first beam reports corresponding to the plurality of first transmission and reception points to generate a group-based beam report is at least one of the following:

in a case of periodic or semi-persistent channel state information CSI and in a case that a report parameter is not empty, a start symbol occupying a CSI processing unit CPU is an earliest symbol in each CSI-reference signal RS or CSI-interference measurement IM or SSB resource for CSI-RS or CSI-IM or SSB transmission of a last channel or interference measurement before the group-based beam report, and/or an end symbol is a last symbol of a last uplink channel for transmitting the group-based beam report;
in a case of aperiodic CSI and first transmission of a physical uplink shared channel PUSCH-based semi-persistent CSI report activated by a physical downlink control channel PDCCH and in a case that a report parameter is not empty, a start symbol occupying a CPU is a first symbol after a PDCCH triggering a first CSI report of the group-based beam report, and/or an end symbol is a last symbol of a last PUSCH for transmitting the group-based beam report;
in a case of semi-persistent CSI and in a case that a report parameter is not empty and that tracking reference signal trs-information Infor is not configured, a start symbol occupying a CPU is an earliest symbol for periodic or semi-persistent CSI-RS/SSB transmission in a channel measurement for calculating L1 reference signal received power L1-RSRP in the last group-based beam report, and/or an end symbol is $Z'_3$ symbols after a last symbol for CSI-RS/SSB transmission in a channel measurement for calculating L1-RSRP in the last group-based beam report; and
in a case of aperiodic CSI and in a case that a report parameter is null and that trs-Infor is not configured, a start symbol occupying a CPU is a first symbol after a PDCCH triggering a first CSI report of the group-based beam report, and/or an end symbol is a last one of any one or more of the following symbols:

$Z_3$ symbols after a first symbol after a PDCCH triggering a first CSI report of the group-based beam report;
$Z_3$ symbols after a first symbol after a PDCCH triggering a last CSI report of the group-based beam report; and
$Z'_3$ symbols after a last symbol for CSI-RS/SSB transmission in a channel measurement for calculating L1-RSRP in the last group-based beam report.

15. A beam report transmission method, wherein the method is performed by a first transmission and reception point, and the method comprises:

receiving a first beam report sent by a mobile terminal, wherein the first beam report is a report of a reference signal corresponding to the first transmission and reception point.

16. The method according to claim 15, wherein before the receiving a first beam report sent by a mobile terminal, the method further comprises:

sending, to the mobile terminal, one or more beam report configurations corresponding to a plurality of first transmission and reception points, wherein the one or more beam report configurations comprise reference signal information corresponding to the plurality of first transmission and reception points.

17. The method according to claim 16, wherein in a case of one beam report configuration, the beam report configuration comprises a plurality of beam report resources, or in a case of a plurality of beam report configurations, the beam report configuration comprises one or more beam report resources.

18. The method according to claim 17, wherein in the case of the plurality of beam report configurations, an association relationship between the plurality of beam report configurations is determined by using association signaling.

19. The method according to claim 17, wherein in a case that the beam report configuration comprises the plurality of beam report resources, the receiving a first beam report sent by a mobile terminal comprises:

sequentially receiving, on a part of the plurality of beam report resources, first beam reports corresponding to the first transmission and reception points; and/or

in a case that the mobile terminal supports simultaneous sending, simultaneously receiving corresponding first beam reports by the plurality of first transmission and reception points.

20. The method according to claim 17, wherein in the case of the plurality of beam report configurations, an association relationship between the plurality of beam report configurations is determined by using association signaling.

21. The method according to claim 15, wherein in a case that a report parameter in the first beam report is a cri-SINR or an ssb-Index-SINR or an sri-SINR, the report parameter is measured based on a reference signal in the first beam report; and/or one reference signal in the first beam report corresponds to a plurality of signal-to-noise ratios.

22. A mobile terminal, comprising:

a processing module, configured to send corresponding first beam reports respectively to a plurality of first transmission and reception points, wherein the first beam reports are reports of reference signals corresponding to the first transmission and reception points.

23. The mobile terminal according to claim 22, wherein before sending the corresponding first beam reports respectively to the plurality of first transmission and reception points, the processing module is further configured to receive one or more beam report configurations corresponding to the plurality of first transmission and reception points, wherein the one or more beam report configurations comprise reference signal information corresponding to the plurality of first transmission and reception points; and measure reference signals corresponding to the reference signal information, and generate the first beam reports corresponding to the first transmission and reception points.

24. The mobile terminal according to claim 23, wherein in a case of one beam report configuration, the beam report configuration comprises a plurality of beam report resources, or in a case of a plurality of beam report configurations, the beam report configuration comprises one or more beam report resources and the beam report resources correspond to one or more first transmission and reception points, and the processing module is configured to:

send, on the beam report resources, the first beam reports of the first transmission and reception points corresponding to the beam report resources.

25. The mobile terminal according to claim 24, wherein in a case that the beam report configuration comprises the plurality of beam report resources, the processing module is configured to distinguish the plurality of beam report resources by using at least one of a physical uplink control channel, a physical uplink shared channel, spatial relation information, a transmission configuration indicator, and a code point in a transmission configuration indicator.

26. The mobile terminal according to claim 24, wherein in a case that the beam report configuration comprises the plurality of beam report resources, the processing module is configured to:

sequentially send, on a part of the plurality of beam report resources, the first beam reports corresponding to the first transmission and reception points; and/or

in a case that the mobile terminal supports simultaneous sending, simultaneously send the first beam reports corresponding to the first transmission and reception points.

27. The mobile terminal according to claim 24, wherein in a case that the beam report configuration comprises the one beam report resource, the processing module is configured to:
   share a frequency domain resource and divide a time domain resource to divide the one beam report resource into the plurality of beam report resources.

28. The mobile terminal according to claim 24, wherein in the case of the plurality of beam report configurations, the processing module is configured to determine an association relationship between the plurality of beam report configurations by using association signaling.

29. The mobile terminal according to claim 23, wherein before sending the corresponding first beam reports respectively to the plurality of first transmission and reception points, the processing module is further configured to:
   in a case that the plurality of first transmission and reception points correspond to a plurality of beam report configurations, consolidate, based on the plurality of beam report configurations, the plurality of first beam reports corresponding to the plurality of first transmission and reception points, to generate a group-based beam report.

30. The mobile terminal according to claim 29, wherein after generating the group-based beam report, the processing module is further configured to:
   simultaneously send or receive, by using a single spatial domain filter or a plurality of parallel spatial domain filters, a plurality of reference signals comprised in the group-based beam report.

31. The mobile terminal according to claim 30, wherein the processing module is configured to consolidate, based on an anchor point, the plurality of first beam reports corresponding to the plurality of first transmission and reception points, to generate the group-based beam report, wherein the anchor point is at least one of the beam report resources.

32. The mobile terminal according to claim 31, wherein the anchor point is determined by an identity of the first transmission and reception point, wherein the first transmission and reception point comprises at least one of a transmission and reception point having an identity of 0, a transmission and reception point having a largest identity, a transmission and reception point having a smallest identity, a transmission and reception point associated with a control resource set having an identity of 0, a transmission and reception point associated with a control resource set having a largest identity, a transmission and reception point associated with a control resource set having a smallest identity, a transmission and reception point indicated by a network, and a transmission and reception point reported by user equipment; or

   the anchor point is determined by a resource or configuration indicated by a network or reported by the mobile terminal; or
   the anchor point is determined by the beam report resource or the beam report configuration, wherein the beam report resource or the beam report configuration comprises at least one of a first or last configured resource or configuration, a frequency domain resource in the beam report resource or the beam report configuration, a time domain resource in the beam report resource or the beam report configuration, spatial relation information in the beam report resource or the beam report configuration, or a reference signal in a transmission configuration indicator.

33. The mobile terminal according to claim 29, wherein in a case that a report parameter in the first beam report and/or the group-based beam report is a channel state information reference signal resource indicator cri-signal to interference plus noise ratio SINR or a synchronization signal and PBCH block ssb-index Index-SINR or a sounding reference signal resource sri-SINR, the report parameter is measured based on a reference signal in the first beam report and/or the group-based beam report; and/or one reference signal in the first beam report and/or the group-based beam report corresponds to a plurality of signal-to-noise ratios.

34. The mobile terminal according to claim 29, wherein a reference signal referenced during a beam measurement in the group-based beam report is at least one of a reference signal at a time closest to the beam report resource, a reference signal at a latest time before a start of the group-based beam report, and a reference signal in the group-based beam report.

35. The mobile terminal according to claim 29, wherein a CPU occupation time corresponding to the step of consolidating the plurality of first beam reports corresponding to the plurality of first transmission and reception points to generate a group-based beam report by the processing module is at least one of the following:

   in a case of periodic or semi-persistent channel state information CSI and in a case that a report parameter is not empty, a start symbol occupying a CSI processing unit CPU is an earliest symbol in each CSI-reference signal RS or CSI-interference measurement IM or SSB resource for CSI-RS or CSI-IM or SSB transmission of a last channel or interference measurement before the group-based beam report, and/or an end symbol is a last symbol of a last uplink channel for transmitting the group-based beam report;

in a case of aperiodic CSI and first transmission of a physical uplink shared channel PUSCH-based semi-persistent CSI report activated by a physical downlink control channel PDCCH and in a case that a report parameter is not empty, a start symbol occupying a CPU is a first symbol after a PDCCH triggering a first CSI report of the group-based beam report, and/or an end symbol is a last symbol of a last PUSCH for transmitting the group-based beam report;

in a case of semi-persistent CSI and in a case that a report parameter is not empty and that tracking reference signal trs-information Infor is not configured, a start symbol occupying a CPU is an earliest symbol for periodic or semi-persistent CSI-RS/SSB transmission in a channel measurement for calculating L1 reference signal received power L1-RSRP in the last group-based beam report, and/or an end symbol is $Z_3'$ symbols after a last symbol for CSI-RS/SSB transmission in a channel measurement for calculating L1-RSRP in the last group-based beam report; and

in a case of aperiodic CSI and in a case that a report parameter is null and that trs-Infor is not configured, a start symbol occupying a CPU is a first symbol after a PDCCH triggering a first CSI report of the group-based beam report, and/or an end symbol is a last one of any one or more of the following symbols:

$Z_3$ symbols after a first symbol after a PDCCH triggering a first CSI report of the group-based beam report;

$Z_3$ symbols after a first symbol after a PDCCH triggering a last CSI report of the group-based beam report; and

$Z_3'$ symbols after a last symbol for CSI-RS/SSB transmission in a channel measurement for calculating L1-RSRP in the last group-based beam report.

36. A network device, comprising:

an operation module, configured to receive a first beam report sent by a mobile terminal, wherein the first beam report is a report of a reference signal corresponding to a first transmission and reception point.

37. The network device according to claim 36, wherein before receiving the first beam report sent by the mobile terminal, the operation module is further configured to send, to the mobile terminal, one or more beam report configurations corresponding to a plurality of first transmission and reception points, wherein the one or more beam report configurations comprise reference signal information corresponding to the plurality of first transmission and reception points.

38. The network device according to claim 37, wherein in a case of one beam report configuration, the beam report configuration comprises a plurality of beam report resources, or in a case of a plurality of beam report configurations, the beam report configuration comprises one or more beam report resources.

39. The network device according to claim 38, wherein in the case of the plurality of beam report configurations, an association relationship between the plurality of beam report configurations is determined by using association signaling.

40. The network device according to claim 38, wherein in a case that the beam report configuration comprises the plurality of beam report resources, the operation module is configured to:

sequentially receive, on a part of the plurality of beam report resources, first beam reports corresponding to the first transmission and reception points; and/or

in a case that the mobile terminal supports simultaneous sending, simultaneously receive corresponding first beam reports by the plurality of first transmission and reception points.

41. The network device according to claim 38, wherein in the case of the plurality of beam report configurations, the operation module is configured to determine an association relationship between the plurality of beam report configurations by using association signaling.

42. The network device according to claim 36, wherein in a case that a report parameter in the first beam report is a cri-SINR or an ssb-Index-SINR or an sri-SINR, the report parameter is measured based on a reference signal in the first beam report; and/or one reference signal in the first beam report corresponds to a plurality of signal-to-noise ratios.

43. A mobile terminal, comprising a memory, a processor, and a computer program stored in the memory and capable of running on the processor, wherein when the computer program is executed by the processor, the steps of the beam report transmission method according to any one of claims 1 to 14 are

**EP 4 138 441 A1**

implemented.

44. A network device, comprising a memory, a processor, and a computer program stored in the memory and capable of running on the processor, wherein when the computer program is executed by the processor, the steps of the beam report transmission method according to any one of claims 15 to 21 are implemented.

45. A computer-readable storage medium, wherein the computer-readable storage medium stores a computer program, and when the computer program is executed by a processor, the steps of the beam report transmission method according to any one of claims 1 to 14 are implemented; or

the steps of the beam report transmission method according to any one of claims 15 to 21 are implemented.

<u>100</u>

S104

A mobile terminal sends corresponding first beam reports respectively to a plurality of first transmission and reception points

FIG. 1

200

S202

A mobile terminal receives one or more beam report configurations corresponding to a plurality of first transmission and reception points, and the mobile terminal measures reference signals corresponding to reference signal information and generates first beam reports corresponding to the first transmission and reception points

S204

The mobile terminal sends the corresponding first beam reports respectively to the plurality of first transmission and reception points

FIG. 2

300

S302

In a case that a plurality of first transmission and reception points correspond to a plurality of beam report configurations, consolidate, based on the plurality of beam report configurations, a plurality of first beam reports corresponding to the plurality of first transmission and reception points, to generate a group-based beam report; and simultaneously send or receive, by using a single spatial domain filter or a plurality of parallel spatial domain filters, a plurality of reference signals included in the group-based beam report

S304

A mobile terminal sends the corresponding first beam reports respectively to the plurality of first transmission and reception points

FIG. 3

400

S404

Receive a first beam report sent by a mobile terminal, where the first beam report is a report of a reference signal corresponding to a first transmission and reception point

FIG. 4

500

S502

Send, to a mobile terminal, one or more beam report configurations corresponding to a plurality of first transmission and reception points, where the beam report configurations include reference signal information corresponding to the plurality of first transmission and reception points

S504

Receive a first beam report sent by the mobile terminal, where the first beam report is a report of a reference signal corresponding to the first transmission and reception point

FIG. 5

FIG. 6

FIG. 7

FIG. 8

FIG. 9

## INTERNATIONAL SEARCH REPORT

| | International application No. |
|---|---|
| | **PCT/CN2021/087209** |

**A.      CLASSIFICATION OF SUBJECT MATTER**

H04W 24/10(2009.01)i;   H04W 72/04(2009.01)i

According to International Patent Classification (IPC) or to both national classification and IPC

**B.      FIELDS SEARCHED**

Minimum documentation searched (classification system followed by classification symbols)

H04W; H04L; H04B

Documentation searched other than minimum documentation to the extent that such documents are included in the fields searched

Electronic data base consulted during the international search (name of data base and, where practicable, search terms used)

CNABS, CNTXT, CNKI, VEN, USTXT, 3GPP: 发射接收点, 多, 波束, 报告, 参考, 信号, 传输, 终端, 基站, 配置, 组, 标识, 资源, 符号, TRP, multiple, beam, report+, reference, signal, RS, transmi+, UE, WTRU, NB, configure, group, ID, resource, symbol

**C.      DOCUMENTS CONSIDERED TO BE RELEVANT**

| Category* | Citation of document, with indication, where appropriate, of the relevant passages | Relevant to claim No. |
|---|---|---|
| X | WO 2019237339 A1 (NEC CORPORATION) 19 December 2019 (2019-12-19) description, paragraphs [0039]-[0111] | 1-9, 12, 13, 15-30, 33, 34, 36-45 |
| A | WO 2019237339 A1 (NEC CORPORATION) 19 December 2019 (2019-12-19) description, paragraphs [0039]-[0111] | 10, 11, 14, 31, 32, 35 |
| A | CN 110089044 A (IDAC HOLDINGS, INC.) 02 August 2019 (2019-08-02) entire document | 1-45 |
| A | US 2019379506 A1 (FG INNOVATION CO., LTD.) 12 December 2019 (2019-12-12) entire document | 1-45 |
| A | OPPO. "Enhancements on multi-TRP and multi-panel transmission" *3GPP TSG RAN WG1 Meeting #96bis R1-1904036*, 12 April 2019 (2019-04-12), entire document | 1-45 |

| ☐ Further documents are listed in the continuation of Box C. | ☑ See patent family annex. |
|---|---|

| *      Special categories of cited documents: | "T"   later document published after the international filing date or priority date and not in conflict with the application but cited to understand the principle or theory underlying the invention |
|---|---|
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **08 July 2021** | **20 July 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/087209**

| Patent document cited in search report | | | Publication date (day/month/year) | Patent family member(s) | | | Publication date (day/month/year) |
|---|---|---|---|---|---|---|---|
| WO | 2019237339 | A1 | 19 December 2019 | CN | 112292894 | A | 29 January 2021 |
| CN | 110089044 | A | 02 August 2019 | WO | 2018085601 | A1 | 11 May 2018 |
| | | | | EP | 3535864 | A1 | 11 September 2019 |
| | | | | US | 2020059290 | A1 | 20 February 2020 |
| | | | | US | 10848232 | B2 | 24 November 2020 |
| US | 2019379506 | A1 | 12 December 2019 | CN | 112204899 | A | 08 January 2021 |
| | | | | WO | 2019233352 | A1 | 12 December 2019 |
| | | | | US | 10911201 | B2 | 02 February 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202010296361